# FASCICULE DE BREVET EUROPEEN

(11) **EP 2 067 317 B1**
(45) Date de publication et mention de la délivrance du brevet: **17.08.2016**
(21) Numéro de dépôt: 07848369.0
(22) Date de dépôt: 24.09.2007
(51) Int. Cl.: H04L 12/721, H04L 12/751, H04L 12/715, H04L 12/707, H04L 12/703, H04L 12/723

(54) **Procédé de routage dans un réseau de commutation par étiquettes**
ROUTINGVERFAHREN IN EINEM LABEL-SWITCHING-NETZWERK
ROUTING METHOD IN A LABEL SWITCHING NETWORK

(30) Priorité: 25.09.2006 FR 0653926
(43) Date de publication de la demande: 10.06.2009
(73) Titulaire: Orange, 75015 Paris (FR)
(72) Inventeur: LE ROUX, Jean-Louis, F-22300 Lannion (FR); DECRAENE, Bruno, F-92170 Vanves (FR)
(74) Mandataire: Delumeau, François Guy
(86) Numéro de dépôt international: PCT/FR2007/051999
(87) Numéro de publication internationale: WO 2008/037917

(56) Documents cités:
- EP-A1- 1 379 032
- EP-A2- 1 318 648
- DE CNODDER R CETIN S VAN DEN BOSCH ALCATEL A ATLAS AVICI SYSTEMS S: "Backup Record Route for Fast Reroute Techniques in RSVP-TE draft-decnodder-mpls-ero-rro-fastreroute-0 1.txt" IETF STANDARD-WORKING-DRAFT, INTERNET ENGINEERING TASK FORCE, IETF, CH, no. 1, mai 2002 (2002-05), XP015000699 ISSN: 0000-0004
- AWDUCHE MOVAZ NETWORKS D ET AL: "RSVP-TE: Extensions to RSVP for LSP Tunnels" IETF STANDARD, INTERNET ENGINEERING TASK FORCE, IETF, CH, décembre 2001 (2001-12), XP015008988 ISSN: 0000-0003
- SHAOLING SUN XIAODONG DUAN HONG LIU CHINA MOBILE CORPORATION BIN LI DEFENG LI HEJUN LI RENHAI ZHANG HUAWEI TECHNOLOGIES: "A mini-FRR(Fast Rerouting) mechanism for IP/MPLS network" IETF STANDARD-WORKING-DRAFT, INTERNET ENGINEERING TASK FORCE, IETF, CH, février 2005 (2005-02), XP015037757 ISSN: 0000-0004

## Description

### Arrière-plan de l'invention

L'invention se situe dans le domaine des télécommunications et, plus particulièrement, dans celui des réseaux coeurs et collecte IP/MPLS (Internet Protocol/Multi-Protocol Label Switching).

L'invention se situe plus particulièrement dans le contexte d'un réseau IP/MPLS dont les routeurs de périphérie (ou autrement appelés "de bordure") sont maillés par des chemins MPLS explicites.

De tels chemins MPLS explicites sont, de façon connue, appelés LSP (Label Switched Path) MPLS-TE (MPLS Traffic Engineering).

Un LSP MPLS-TE est une connexion qui démarre sur un routeur de tête (ou routeur Ingress), transite par des liens et routeurs appelés "routeurs de transit" et termine sur un routeur de destination (ou routeur Egress).

Ces chemins sont établis par le protocole de signalisation RSVP-TE (Ressource Réservation Protocol - Traffic Engineering) défini dans le document de l'IETF (Internet Engineering Task Force) RFC (Request For Comment) 3209.

Ce protocole assure le routage, la distribution des labels (ou étiquettes) et la réservation des ressources le long du chemin.

La technologie MPLS-TE n'est pas décrite ici. Pour plus d'informations, l'homme du métier pourra se référer au document RFC 3209 précité.

Les services ayant de fortes exigences en termes de disponibilité de bout en bout nécessitent un reroutage déterministe en moins de 50 millisecondes en cas de panne de lien ou d'un noeud.

Cest notamment le cas pour les services de voix sur IP (VoIP) et de télémédecine.

L'invention vise plus particulièrement un mécanisme de reroutage pouvant être activé en cas de panne du routeur de destination (routeur Egress) ou de panne du lien de connexion entre ce routeur de destination et le dernier routeur de transit auquel il est connecté.

Le document EP 1 318 648 décrit un chemin LSP primaire et un chemin LSP de secours qui aboutissent dans un même noeud MPLS.

Le document DE CNODDER et AI. « Backup Record Route for Fast Reroute Techniques in RSVP-TE draft-decnodder-mpls-ere-rro-fastreroute-01.txt» décrit également un chemin LSP primaire et un chemin LSP de secours qui aboutissent dans un même noeud.

Le document D. Awduche et AI. « RSVP-TE: Extensions to RSVP for LSP Tunnels » décrit l'utilisation du protocole RSVP pour établir des chemins LSP dans un réseau MPLS. Ce document propose, notamment, d'établir un nouveau LSP lorsqu'une panne affecte un ancien LSP.

Les documents Shaoling Sun et Al. « A mini-FRR (Fast-rerouting) mechanism for IP/MPLS network » et EP 1 379 032 illustrent des mécanismes de reroutage.

### Objet et résumé de l'invention

A cet effet et selon un premier aspect, l'invention concerne un procédé de routage susceptible d'être mis en oeuvre dans un routeur de tête pour assurer l'acheminement de paquets dans un réseau de commutation par étiquettes, les paquets étant initialement destinés à un routeur de destination primaire.

Ce procédé comporte une étape pour émettre une demande d'établissement d'un chemin primaire entre le routeur de tête et le routeur de destination primaire, cette demande comportant une demande d'établissement d'un chemin de secours vers un routeur de destination de secours.

Corrélativement, l'invention concerne un routeur de tête susceptible d'être utilisé pour assurer l'acheminement de paquets dans un réseau de commutation par étiquettes, les paquets étant initialement destinés à un routeur de destination primaire.

Ce routeur de tête comporte des moyens pour émettre une demande d'établissement d'un chemin primaire entre le routeur de tête et le routeur de destination primaire dans le réseau, cette demande comportant une demande d'établissement d'un chemin de secours vers un routeur de destination de secours.

Selon un deuxième aspect, l'invention concerne un procédé de routage susceptible d'être mis en oeuvre dans un routeur de transit pour assurer l'acheminement de paquets dans un réseau de commutation par étiquettes, les paquets étant initialement destinés à un routeur de destination primaire.

Ce procédé comporte une étape de réception d'une demande d'établissement d'un chemin primaire entre un routeur de tête et le routeur de destination primaire dans le réseau, cette demande comportant une demande d'activation d'un chemin de secours vers un routeur de destination de secours, et si le routeur de transit est le pénultième routeur dans le chemin primaire :
- une étape de transmission de cette demande vers ledit routeur de destination primaire ; et
- une étape de transmission d'une demande d'établissement d'un chemin de secours ayant pour destination le routeur de destination de secours, cette demande comportant un identifiant du routeur de destination primaire pour lequel le chemin de secours doit être établi, ainsi qu'un identifiant du chemin primaire secouru.

Corrélativement, l'invention concerne un routeur de transit susceptible d'être utilisé pour assurer l'acheminement de paquets dans un réseau de commutation par étiquettes, les paquets étant initialement destinés à un routeur de destination primaire.

Ce routeur de transit comporte :
- des moyens de réception d'une demande d'établissement d'un chemin primaire entre un routeur de tête et le routeur de destination primaire dans le réseau, cette première demande comportant une demande d'activation d'un chemin de secours vers un routeur de destination de secours;
- des moyens pour déterminer s'il est le pénultième routeur dans le chemin primaire ;
- des moyens de transmission de cette demande vers le routeur de destination primaire ; et
- des moyens pour transmettre une demande d'établissement d'un chemin de secours ayant pour destination le routeur de destination de secours, cette demande comportant un identifiant du routeur de destination primaire pour lequel le chemin de secours doit être établi, ainsi qu'un identifiant du chemin primaire secouru.

L'invention définit ainsi un nouveau mécanisme de routage permettant de protéger le routeur de destination primaire.

En cas de panne de ce routeur de destination primaire ou du dernier lien primaire, le routeur de transit en amont, c'est-à-dire l'avant-dernier routeur du chemin primaire, bascule le trafic vers le routeur de destination de secours.

Dans un mode particulier de réalisation de l'invention, le chemin de secours vers le routeur de destination de secours est pré-installé dans la table de commutation de l'avant-dernier routeur sur le chemin primaire, ce qui permet de garantir un temps de reroutage déterministe inférieur à 50 millisecondes.

Dans un mode particulier de réalisation de l'invention, la demande d'établissement comporte en outre le chemin de secours, partiel ou complet, à savoir le chemin entre le routeur de transit précédant le routeur de destination primaire dans le chemin primaire et le routeur de destination de secours.

Dans un mode particulier de réalisation de l'invention, par exemple lorsque les chemins sont établis par le protocole de signalisation RSVP_TE, le procédé de routage mis en oeuvre par le routeur de transit selon l'invention comporte :
- une étape de réception d'un message de réservation, en réponse à la demande d'établissement du chemin de secours, ce message de réservation comportant une confirmation de l'établissement du chemin de secours ;
- une étape de réception d'un message de réservation comportant une confirmation de l'établissement du chemin primaire ; et
- une étape pour émettre un message de réservation vers le routeur de tête, ce message de réservation comportant une confirmation de la configuration du chemin de secours et une indication selon laquelle ce chemin est activé ou non.

Cette caractéristique permet avantageusement d'informer le routeur de tête de l'établissement effectif du chemin de secours.

Dans un mode particulier de réalisation de l'invention, le procédé de routage mis en oeuvre dans le routeur de transit selon l'invention comporte :
- une étape de configuration d'une table de commutation, cette table comportant deux sorties pour une étiquette d'entrée correspondant au chemin primaire, à savoir :
   - une sortie primaire pointant vers le routeur de destination primaire ; et
   - une sortie de secours pointant vers le routeur de destination de secours ;
- une étape de détection d'une panne affectant la communication avec ledit routeur de destination primaire ; et sur détection de ladite panne :
- une étape de mise à jour de ladite table de commutation consistant à désactiver ladite sortie primaire et à activer la sortie de secours.

Selon un mode particulier de réalisation de l'invention, le procédé de routage mis en oeuvre dans le routeur de transit selon l'invention comporte, sur détection de la panne précitée :
- une étape d'envoi, à destination du routeur de tête, d'un message d'erreur pour le chemin primaire ;
- une étape d'envoi, à destination du routeur de destination de secours, d'un message d'établissement du chemin de secours ; et
- une étape d'envoi, à destination du routeur de tête, d'un message de réservation pour le chemin primaire, ce message comportant un champ incluant le chemin entre le routeur de transit et le routeur de destination de secours ;
ces messages comportant une indication selon laquelle le chemin de secours est activé.

En pratique, le champ incluant le chemin entre le routeur de transit et le routeur de destination de secours peut être un objet RRO (Record route Object) du protocole RSVP.

Corrélativement, dans un mode particulier de réalisation, le procédé de routage mis en oeuvre dans un routeur de tête selon l'invention, comporte, sur détection d'une panne affectant la communication avec le routeur de destination primaire :
- une étape de réception d'un message d'erreur pour le chemin primaire ;
- une étape de réception d'un message de réservation pour le chemin primaire, ce message indiquant l'activation du chemin de secours et comportant un champ incluant le chemin de secours entre :
   - un routeur de transit précédant le routeur de destination primaire dans le chemin primaire ; et
   - le routeur de destination de secours ; et
- à l'expiration d'un délai prédéterminé compté à partir de réception du message de réservation :
   - une étape d'établissement d'un nouveau chemin primaire vers le routeur de destination de secours ; et.
   - une étape de suppression du chemin primaire.

Dans ce mode particulier de réalisation, le chemin primaire établi vers le routeur de destination primaire est définitivement remplacé par le nouveau chemin primaire vers le routeur de destination de secours, si la panne perdure plus que ledit délai prédéterminé.

Dans un autre mode de réalisation, le procédé de routage comporte une étape pour notifier les protocoles de routage mettant en oeuvre le chemin primaire d'une panne sur ce chemin primaire.

Cette notification peut être réalisée en fixant la métrique du chemin primaire à une valeur maximale.

Dans un mode particulier de réalisation, le procédé de routage mis en oeuvre par le routeur de transit comporte :
- une étape de détection de la fin de la panne ;
- une étape d'envoi d'un message au routeur de destination primaire pour rétablir la signalisation du chemin primaire ; et
- une étape d'envoi, au routeur de tête, d'un message de réservation contenant le chemin entre le routeur de transit et le routeur de destination primaire et une indication selon laquelle le chemin de secours est désactivé.

Cette caractéristique particulière permet de mettre en oeuvre un mécanisme de réversion, c'est-à-dire un basculement du trafic sur le chemin primaire réparé.

Dans ce mode de réalisation, ce mécanisme de réversion est mis en oeuvre par le pénultième routeur de transit sur le chemin primaire et le routeur de tête n'est pas impliqué. Il reçoit simplement un message de réservation indiquant que le mécanisme de secours n'est plus activé.

Dans un autre mode de réalisation, la réversion est réalisée par le routeur de tête qui établit un nouveau chemin primaire vers le routeur de destination primaire, éventuellement protégé par un routeur de destination de secours.

Ensuite, si cela n'a pas déjà été effectué, le routeur de tête détruit l'ancien chemin primaire.

On rappelle que la ré-optimisation est une opération MPLS TE consistant à modifier le chemin d'une connexion.

De façon connue, cette opération est déclenchée dès qu'un meilleur chemin existe (il peut s'agir d'une réparation de lien ou de tout autre événement). Pendant cette opération les deux chemins sont effectivement établis, mais un seul est actif. Ils partagent donc les ressources, la bande passante réservée étant la bande passante maximum des deux chemins, et non pas la somme de ces bandes passantes.

Dans un mode particulier de réalisation de l'invention, lors de la ré-optimisation d'un chemin primaire, le nouveau chemin primaire partage les ressources avec les anciens chemins primaires et de secours, suivant la procédure « make-before-break » définie dans le document RFC3209. Un nouveau chemin de secours est également établi, il partage les ressources avec les anciens chemins primaires et de secours. L'association entre chemin primaire et chemin de secours est réalisée par le transport de l'identifiant du chemin primaire dans les messages d'établissement du chemin de secours.

Un chemin de secours peut être ré-optimisé, sans ré-optimisation du chemin primaire. Cette opération peut être déclenchée par le routeur de tête du chemin primaire ou par le routeur de tête du chemin de secours. Dans ce cas le nouveau chemin de secours partage les ressources avec l'ancien chemin de secours.

Dans un mode particulier de réalisation, les différentes étapes des procédés de routage mentionnés ci-dessus sont déterminées par des instructions de programmes d'ordinateurs.

En conséquence, l'invention vise aussi un programme d'ordinateur sur un support d'informations, ce programme étant susceptible d'être mis en oeuvre dans un routeur ou plus généralement dans un ordinateur, ce programme comportant des instructions adaptées à la mise en oeuvre des étapes d'un procédé de routage tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention vise aussi un signal portant une demande d'établissement d'un chemin primaire entre un routeur de tête et un routeur de destination primaire, pour assurer l'acheminement de paquets dans un réseau de commutation par étiquettes, cette demande comportant une demande d'établissement d'un chemin de secours vers un routeur de destination de secours.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente un routeur de tête et un routeur de transit conformes à l'invention dans un mode particulier de réalisation de l'invention ;
- la figure 2 représente l'architecture matérielle d'un ordinateur conventionnel ;
- les figures 3 et 4 représentent respectivement, sous forme d'organigramme, des procédés de routage conformes à l'invention pouvant être mis en oeuvre dans un routeur de tête et dans un routeur de transit conforme à l'invention ;
- la figure 5 représente un exemple de signalisation des chemins primaire et de secours dans un exemple de mise en oeuvre de l'invention ; et
- les figures 6 et 7 représentent respectivement l'aiguillage des paquets dans le réseau de la figure 1 avant et après une panne.

### Description détaillée d'un mode de réalisation

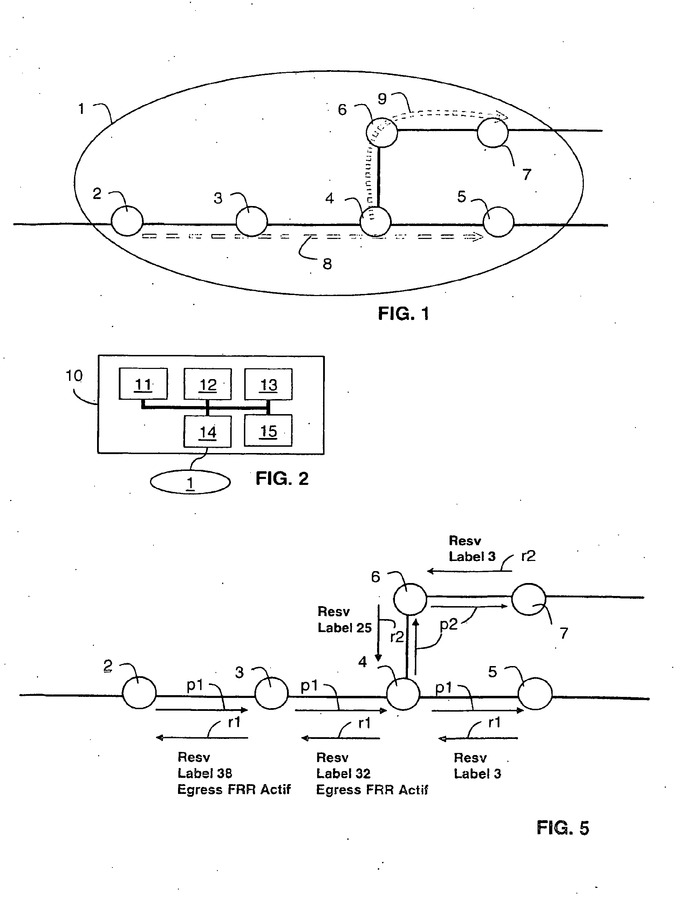

La figure 1 représente un réseau MPLS-TE référencé 1.

Ce réseau comporte un ensemble de routeurs 2, 3, 4, 5, 6, 7 supportant le protocole RSVP_TE et entre lesquels sont établis des LSPs, RSVP_TE suivant le standard défini dans le document de l'IETF "Request For Comment" RFC 3209.

Le LSP MPLS-TE primaire, référencé 8, est établi par le protocole RSVP_TE. Il a pour source le routeur de tête 2 selon l'invention et un routeur de destination primaire référencé 5.

Sur la figure 1, on a référencé 9 le chemin de secours établi par le protocole RSVP_TE Il a pour source le routeur de transit 4, à savoir l'avant-dernier routeur du chemin primaire, et pour destination le routeur de destination de secours référencé 7.

Le routeur 3 est un routeur de transit du LSP primaire 8.

Le routeur 6 est un routeur de transit du LSP de secours 9.

L'architecture matérielle du routeur de tête 2 et du routeur de transit 4 conformes à l'invention est, dans l'exemple décrit ici, celle d'un ordinateur conventionnel 10 représentée à la figure 2.

Cet ordinateur conventionnel 10 comporte un processeur 11, un disque dur 12, une mémoire vive de type RAM 13 et des moyens de communication 14 avec le réseau MPLS-TE 1.

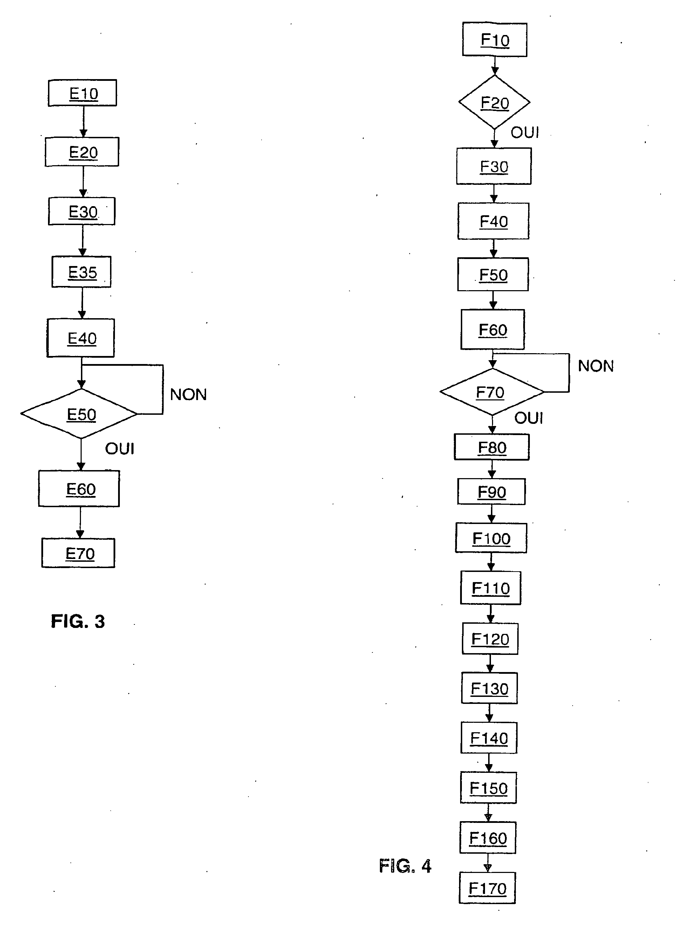

Le disque dur 12 du routeur de tête 2 conforme à l'invention comporte un programme d'ordinateur conforme à l'invention, ce programme comportant des instructions pour l'exécution des étapes du procédé de routage dont les principales étapes E10 à E70 sont données à la figure 3.

Le disque dur 12 du routeur de transit 4 conforme à l'invention comporte un programme d'ordinateur conforme à l'invention, ce programme comportant des instructions pour l'exécution des étapes du procédé de routage dont les principales étapes F10 à F170 sont données à la figure 4.

Dans le mode de réalisation décrit ici, le routeur de tête 2 et le routeur de transit 4 conformes à l'invention comportent une table de commutation MPLS 15.

Les figures 3 et 4 vont maintenant être décrites.

Au cours d'une première étape E10, le routeur de tête 2 selon l'invention émet un message RSVP_TE Path pour établir un chemin primaire 8 dans le réseau MPLS-TE 1.

Dans le mode de réalisation décrit ici, ce message comporte :
- une demande d'établissement d'un mécanisme de secours ; et
- l'adresse IP du routeur 7 de destination de secours.

Dans le mode de réalisation particulier décrit ici, la demande d'établissement est encodée dans un nouveau bit du TLV (Attribute Flags) transporté dans l'objet RSVP "LSP_Attribute" défini dans le document de l'IETF Request For Comment RFC 4420.

Dans le mode particulier de réalisation décrit ici, l'adresse IP du routeur 7 de destination de secours est encodée dans un nouvel objet RSVP "Backup_Egress".

De façon optionnelle, le message RSVP_TE Path contient également le chemin 9 de secours entre le routeur de transit 4 conforme à l'invention et le routeur 7 de destination de secours.

Ce chemin peut être encodé dans l'objet RSVP "SERO" défini dans le document Berger, Bryskin, Papadimitriou, Farrel, "GMPLS Segment Recovery", http://www.ietf.org/internet-drafts/draft-ietf-ccamp-gmpls-segment-recovery-02.txt.

Ce message RSVP-TE Path est reçu par le routeur de transit 4 conforme à l'invention au cours d'une étape F10 du procédé de routage conforme à l'invention et mis en oeuvre par ce routeur 4.

Au cours d'une étape F20, le routeur de transit 4 conforme à l'invention vérifie s'il est l'avant-dernier routeur dans le chemin primaire 8.

En pratique, il calcule le nombre de sauts qui le séparent du routeur de destination primaire 5, et détermine qu'il est l'avant-dernier routeur lorsque le nombre de sauts est égal à 1.

Si le routeur de transit 4 détermine qu'il n'est pas l'avant-dernier routeur, il transmet le message RSVP_TE Path en aval, conformément aux procédures RSVP-TE définies dans le RFC 3209.

Lorsque le routeur de transit 4 est effectivement l'avant-dernier routeur dans le chemin primaire 8, l'étape F20 de vérification est suivie par une étape F30 au cours de laquelle le routeur de transit 4 transmet le message RSVP_TE Path reçu à l'étape F10 vers le routeur de destination primaire 5.

Cette étape F30 de transmission est suivie par une étape F40 au cours de laquelle le routeur de transit 4 émet un message RSVP_TE Path pour établir le chemin de secours 9 vers le routeur 7 de destination de secours dont l'adresse IP était contenue dans le message RSVP_TE Path d'établissement du chemin primaire.

Le message RSVP_TE Path d'établissement du chemin de secours 9 comporte :
- une indication selon laquelle ce message établit un chemin de secours 9 ;
- l'adresse IP du routeur 5 de destination primaire secouru ; et
- l'identifiant du chemin primaire 8.

Dans le mode de réalisation décrit ici, l'identifiant du chemin primaire est transporté dans un nouvel objet "Primary LSP' du message RSVP_TE Patch. Il a pour valeur la concaténation des objets Session et Sender-Template du chemin primaire protégé. L'indication selon laquelle ce message établit un chemin de secours est transportée dans un nouveau bit du TLV (Attribute Flags) transporté dans l'objet RSVP "LSP_Attribute" défini plus haut. L'adresse IP du routeur de destination primaire secouru est transportée dans un nouvel objet RSVP "Primary Egress".

Sur réception d'un message RSVP_TE Resv pour ce message RSVP_TE Path, indiquant que le chemin de secours 9 a été établi, et d'un message RSVP_TE Resv pour le message RSVP_TE Path émis à destination du routeur de destination primaire 5, indiquant que le chemin primaire 8 a été établi, le routeur de transit 4 émet, au cours d'une étape F50, un message RSVP_TE Resv vers le routeur de tête 2 pour le chemin primaire 8 indiquant que le mécanisme de secours est établi sur le routeur de transit 4.

Dans le mode de réalisation décrit ici, cette indication peut être encodée dans un nouveau bit d'attribut du sous-objet "RRO Attributes" de l'objet RSVP "RRO" défini dans le document de l'IETF Request For Comment 4420.

Dans le mode de réalisation décrit ici, le message de réservation RSVP_TE RESV émis par le routeur de transit 4 comporte une indication selon laquelle le chemin de secours est activé ou non. Cette indication est encodée dans un nouveau bit d'attribut du sous-objet "RRO Attribute".

Ce message RSVP_TE Resv est reçu par le routeur de tête 2 au cours d'une étape E20 de son procédé de routage.

Au cours d'une étape F60, le routeur de transit 4 selon l'invention configure sa table de commutation MPLS 15. Plus précisément, il maintient dans cette table 15, deux sorties pour le label MPLS d'entrée correspondant au chemin primaire 8, à savoir :
- une sortie primaire pointant vers le routeur de destination primaire 5 ; et
- une sortie de secours pointant, sur le chemin de secours vers le routeur de destination de secours 7.

En régime primaire, la sortie de secours est inactive.

On supposera que le routeur de transit 4 détecte la panne du dernier lien primaire ou du routeur de destination primaire 5, lors d'une étape F70.

Cette détection peut se faire par un mécanisme de niveau 2 (par exemple alarme SDH) ou par un mécanisme de niveau 3 (par exemple BFD pour Bidirectional Forwarding Détection http://www.ietf.org/internet-drafts/draft-ietf-bfd-base-05.txt).

Lors de la détection de la panne, le routeur de transit 4 selon l'invention met immédiatement à jour sa table de commutation MPLS au cours d'une étape F80 de sorte que la sortie primaire est désactivée et la sortie de secours est activée.

Le trafic est alors basculé sur le chemin de secours 9 à destination du routeur de destination de secours 7.

En parallèle, le routeur de transit 4 envoie, au cours d'une étape F90, un message RSVP_TE PathErr pour le chemin primaire 8 vers le routeur de tête 2 avec le code d'erreur "Notification, protection de la destination activée".

Ce message RSVP_TE PathErr est reçu par le routeur de tête 2 au cours d'une étape E30 de son procédé de routage.

Puis, au cours d'une étape F100, le routeur de transit 4 envoie, à destination du routeur 7 de destination de secours, un message RSVP_TE Path d'établissement du chemin de secours 9, ce message incluant l'indication de l'activation du mécanisme de secours. Dans le mode de réalisation décrit ici, cette indication est encodée dans un nouveau bit du TLV "Attribute Flags" transporté dans l'objet RSVP "LSP_Attribute" précédemment cité.

Puis, au cours d'une étape F110, le routeur de transit 4 envoie, à destination du routeur de tête 2, un message RSVP_TE Resv pour le chemin primaire 8 avec un RRO modifié contenant le chemin entre le routeur de transit 4 et le routeur de destination de secours 7. Ce message inclut également l'indication de l'activation du mécanisme de secours.

Ce message RSVP_TE Resv est reçu par le routeur de tête 2 au cours d'une étape E35 de son procédé de routage.

Au niveau du routeur de transit 4, le compteur de rafraîchissement par le routeur de destination primaire 5, de l'état RSVP Resv du chemin primaire 8, est désarmé, et le routeur de transit 4 fonctionne comme s'il continuait à recevoir des rafraîchissements Resv du routeur de destination primaire 5.

Il continue à rafraîchir l'état RSVP Resv en amont. Les Resv du chemin de secours 9 peuvent faire office de rafraîchissement des états Resv du chemin primaire 8.

Consécutivement à la panne, le routeur 2 selon l'invention a reçu, comme déjà décrit :
- au cours de l'étape E30, le message RSVP_TE PathErr avec le code d'erreur "Notification protection de la destination activée" ; et
- au cours de l'étape E35, un message RSVP_TE Resv indiquant que le mécanisme de secours est déclenché avec un RRO modifié incluant le chemin entre le routeur de transit 4 et le routeur de destination de secours 7.

Sur réception de ce message, le routeur de tête 2 déclenche un compteur (étape E40) initialisé avec un délai prédéterminé et continue à utiliser le chemin primaire pour router le trafic.

Le routeur de tête 2 attend, au cours d'un test E50, l'expiration du délai prédéterminé précité.

A l'expiration de ce délai, le résultat du test E50 est positif.

Dans une variante de réalisation non décrite, le routeur de tête 2 notifie alors les protocoles de routage utilisant le chemin primaire 8 de la panne, en positionnant la métrique de ce chemin à une valeur maximale.

Dans l'exemple décrit ici, à l'expiration du délai, le routeur de tête 2 établit un nouveau chemin primaire vers le routeur de destination de secours 7 (étape E60) puis supprime le chemin primaire 8 impacté au cours d'une étape E70.

En pratique, pour supprimer le chemin primaire, le routeur de tête 2 envoie un message RSVP_TE PathTear tel que défini dans le document RFC 3209.

Le message RSVP_TE PathTear est reçu par le routeur de transit 4 conforme à l'invention, au cours d'une étape F120, qui supprime le chemin de secours 9 par émission d'un message RSVP_TE PathTear pour le chemin de secours 9.

Dans le mode de réalisation décrit ici, lorsque la panne du routeur de destination primaire 5 ou du lien est réparée, une réversion, c'est-à-dire un basculement du trafic sur le chemin réparé, peut être effectuée de deux manières :
- soit par le routeur de transit 4 conforme à l'invention, auquel cas le routeur de tête 2 n'est pas impliqué. Dans ce cas, le routeur de tête 2 reçoit un message RSVP_TE Resv indiquant que le mécanisme de secours n'est pas déclenché ;
- soit par le routeur de tête 2 qui établit un nouveau chemin primaire vers le routeur de destination primaire 5, éventuellement protégé par un routeur de destination de secours 7.

Les figures 5, 6 et 7 illustrent, par un exemple, l'établissement d'un chemin primaire du routeur de tête 2 au routeur de destination primaire 5 avec protection, selon l'invention, par le routeur de destination de secours 7.

Le routeur de transit selon l'invention est le routeur 4.

Le chemin primaire 8 est configuré par l'opérateur sur le routeur de tête 2 directement ou via un gestionnaire.

La configuration inclut, en plus des paramètres MPLS-TE classiques :
- la demande d'établissement du mécanisme de secours selon l'invention ; et
- l'adresse IP du routeur de destination de secours 7.

Le routeur de tête 2 calcule un chemin primaire et un chemin de secours respectant les contraintes (bande passante, affinités,...) puis lance la signalisation RSVP_TE en envoyant un message Path P1 contenant, en plus des objets RSVP standard, la demande d'établissement d'un mécanisme de secours selon l'invention, l'adresse IP du routeur de destination de secours 7 et le chemin de secours (4-6-7) :
P1
Destination primaire 5
Tête 2, tunnel_id=1, LSP_id=8
Attribut: Demande d'établissement de secours Destination secours 7
ERO 3-4-5
SERO Chemin secours 4-6-7

Sur réception de ce message RSVP_TE Path P1, le routeur de transit 4 détecte qu'il est l'avant-dernier routeur du chemin primaire 8 en analysant le nombre de sauts qui le séparent du routeur de destination primaire 5.

Il déclenche donc l'établissement d'un chemin de secours 9 vers le routeur de destination de secours 7. Pour cela, il génère un message RSVP_TE Path P2 correspondant à la route de secours précitée (c'est-à-dire 6-7).
P2
Destination 7
Tête 4, tunnel_id=5, LSP_id=9
Attribut: LSP de secours
LSP protégé: Ingress 2, tunnel_id=1, LSP_id=8 ERO 6-7

Sur réception des messages RSVP_TE Resv, respectivement R1 et R2 pour les chemins primaire et de secours, le routeur de transit 4 envoie un message RSVP_TE Resv vers le routeur de tête 2 indiquant que le mécanisme de secours selon l'invention est établi.

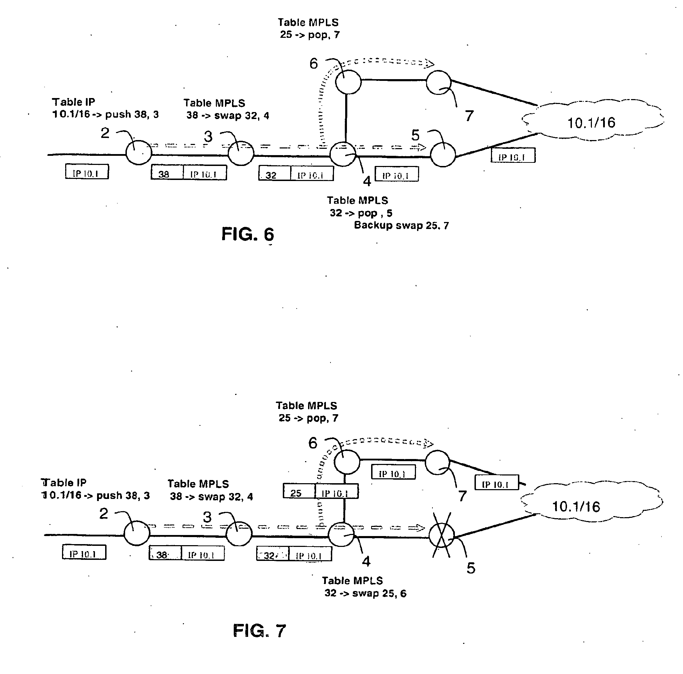

La figure 6 indique le contenu des tables IP et MPLS des routeurs 2, 3, 4 et 6 avant la panne du routeur de destination 5 et l'acheminement des paquets IP/MPLS à destination d'un préfixe 10.1/16 atteignable par les routeurs de destination primaire 5 et de secours 7.

La table MPLS du routeur de transit 4 contient, pour l'étiquette d'entrée du chemin primaire 8, deux sorties :
- une sortie primaire vers le routeur de destination primaire 5 (POP), 7 ; et
- une sortie de secours pointant sur le routeur de secours (SWAP) 25, 7.

Selon cette notation, le premier nombre «25» correspond à l'étiquette (label), et le deuxième « 7 » au numéro du routeur en aval.

La figure 7 indique le contenu des tables IP et MPLS des routeurs et l'acheminement des paquets pendant la panne.

Le routeur de transit 4 redirige les paquets sur le chemin de secours 9, vers le routeur de secours 6 qui les achemine à son tour vers leur destination.

Nous supposerons maintenant que le routeur de transit 4 détecte, au cours d'une étape F130 que la panne affectant le routeur de destination primaire 5 est réparée.

Au cours d'une étape F140, le routeur de transit 4 émet un message RSVP _TE Path vers le routeur de destination primaire pour rétablir la signalisation du chemin primaire 8.

Puis, au cours d'une étape F150, le routeur de transit 4 met à jour sa table de commutation MPLS de sorte que la sortie primaire est activée et la sortie de secours désactivée de façon à ré-aiguiller le trafic vers le routeur de destination primaire 5.

Puis, au cours d'une étape F160, le routeur de transit 4 envoie, à destination du routeur de tête 2, un message RSVP_TE Resv avec un RRO modifié contenant le chemin entre le routeur de transit 4 et le routeur de destination primaire 5 et indiquant que la protection est établie mais non activée.

Puis, au cours d'une étape F170, le routeur de transit 4 envoie, à destination du routeur 7 de destination de secours, un message RSVP_TE Path comportant l'indication de la désactivation du mécanisme de secours.

L'invention s'applique également lorsque le chemin primaire 8 comporte un seul bond. Dans ce cas, le routeur de tête 2 est l'avant dernier routeur sur le chemin primaire, ce chemin ne comportant pas de routeur de transit 4.

## Revendications

1. Procédé de routage susceptible d'être mis en oeuvre dans un routeur de tête (2) pour assurer l'acheminement de paquets dans un réseau (1) de commutation par étiquettes, les paquets étant initialement destinés à un routeur de destination primaire (5), ledit procédé comportant une étape (E10) pour émettre une demande d'établissement d'un chemin primaire (8) entre ledit routeur de tête (2) et ledit routeur de destination primaire (5) dans ledit réseau (1), **caractérisé en ce que** ladite demande comporte une demande d'établissement d'un chemin de secours (9) vers un routeur (7) de destination de secours, ladite demande d'établissement d'un chemin de secours étant destinée à l'avant-dernier routeur dans le chemin primaire.

2. Procédé de routage selon la revendication 1, **caractérisé en ce que** ladite demande d'établissement comporte en outre le chemin de secours (9), partiel ou complet, à savoir le chemin entre le routeur de transit (4) précédant ledit routeur de destination primaire (5) dans le chemin primaire (8) et ledit routeur (7) de destination de secours.

3. Procédé de routage selon la revendication 1 ou 2, **caractérisé en ce qu'**il comporte, sur détection (F70) d'une panne affectant la communication avec ledit routeur de destination primaire (5) :
- une étape (E30) de réception d'un message d'erreur pour ledit chemin primaire indiquant l'activation du chemin de secours ;
- une étape (E35) de réception d'un message de réservation pour ledit chemin primaire (8), ce message indiquant l'activation du chemin de secours (9) et comportant un champ incluant un chemin de secours (9) entre :
- un routeur de transit (4) précédant ledit routeur de destination primaire (5) dans ledit chemin primaire (8) ; et
- ledit routeur (7) de destination de secours ; et
- à l'expiration (E50) d'un délai prédéterminé compté à partir de la réception (E35) dudit message de réservation :
- une étape (E60) d'établissement d'un nouveau chemin primaire vers ledit routeur (7) de destination de secours ; et
- une étape (E70) de suppression dudit chemin primaire (8).

4. Procédé de routage susceptible d'être mis en oeuvre dans un routeur de transit (4) pour assurer l'acheminement de paquets dans un réseau (1) de commutation par étiquettes, les paquets étant initialement destinés à un routeur de destination primaire (5), ledit procédé comportant une étape (F10) de réception d'une demande d'établissement d'un chemin primaire (8) entre un routeur de tête (2) et ledit routeur de destination primaire (5) dans ledit réseau (1), ledit procédé étant **caractérisé en ce que** ladite demande comporte une demande d'établissement d'un chemin de secours (9) vers un routeur de destination de secours (7), et **en ce qu'**il comporte, si ledit routeur (4) de transit est le pénultième routeur dans ledit chemin primaire (8) :
- une étape (F30) de transmission de ladite demande vers ledit routeur de destination primaire (5) ; et
- une étape (F40) de transmission d'une demande d'établissement d'un chemin de secours (9) ayant pour destination ledit routeur (7) de destination de secours, cette demande comportant un identifiant dudit routeur (5) de destination primaire pour lequel le chemin de secours (9) doit être établi ainsi qu'un identifiant dudit chemin primaire secouru (8).

5. Procédé de routage selon la revendication 4, **caractérisé en ce qu'**il comporte :
- une étape de réception d'un message de réservation, en réponse à ladite demande d'établissement du chemin de secours (9), ledit message de réservation comportant une confirmation de l'établissement dudit chemin de secours (9) ;
- une étape de réception d'un message de réservation comportant une confirmation de l'établissement du chemin primaire (8) ; et
- une étape (F50) pour émettre un message de réservation vers ledit routeur de tête (2), ce message de réservation comportant une confirmation de l'établissement dudit chemin de secours (9) et une indication selon laquelle ce chemin est activé ou non.

6. Procédé de routage selon la revendication 4 ou 5, **caractérisé en ce qu'**il comporte :
- une étape (F60) de configuration d'une table de commutation (15), cette table comportant deux sorties pour une étiquette d'entrée correspondant audit chemin primaire (8), à savoir :
- une sortie primaire pointant vers ledit routeur de destination primaire (5) ; et
- une sortie de secours pointant sur le chemin de secours vers ledit routeur (7) de destination de secours ;
- une étape (F70) de détection d'une panne affectant la communication avec ledit routeur de destination primaire (5) ; et sur détection de ladite panne :
- une étape (F80) de mise à jour de ladite table de commutation (15) consistant à désactiver ladite sortie primaire et à activer ladite sortie de secours.

7. Procédé de routage selon la revendication 6, **caractérisé en ce qu'**il comporte en outre, sur détection (F70) de ladite panne :
- une étape (F90) d'envoi, à destination dudit routeur (2) de tête, d'un message d'erreur pour ledit chemin primaire (8) ;
- une étape (F100) d'envoi, à destination dudit routeur (7) de destination de secours, d'un message d'établissement dudit chemin de secours (9) ; et
- une étape (F110) d'envoi, à destination dudit routeur (2) de tête, d'un message de réservation pour ledit chemin primaire (8), ce message comportant un champ incluant le chemin entre ledit routeur de transit (4) et ledit routeur (7) de destination de secours ;
ces messages comportant une indication selon laquelle ledit chemin de secours (9) est activé.

8. Procédé de routage selon l'une quelconque des revendications 4 à 7, **caractérisé en ce qu'**il comporte :
- une étape (F130) de détection de la fin de ladite panne ;
- une étape (F140) d'envoi d'un message audit routeur de destination primaire (5) pour rétablir la signalisation dudit chemin primaire (8) ; et
- une étape (F160) d'envoi, audit routeur de tête (2), d'un message de réservation contenant le chemin entre le routeur de transit (4) et le routeur de destination primaire (5) et une indication selon laquelle ledit chemin de secours (9) est désactivé.

9. Programme d'ordinateur comportant des instructions pour l'exécution des étapes d'un procédé de routage selon l'une quelconque des revendications 1 à 8 lorsque ledit programme est exécuté par un ordinateur.

10. Support d'enregistrement lisible par un ordinateur sur lequel est enregistré un programme d'ordinateur selon la revendication 9 comprenant des instructions pour l'exécution des étapes d'un procédé de routage selon l'une quelconque des revendications 1 à 8.

11. Routeur de tête (2) susceptible d'être utilisé pour assurer l'acheminement de paquets dans un réseau (1) de commutation par étiquettes, les paquets étant initialement destinés à un routeur de destination primaire (5), ledit routeur comportant des moyens pour émettre une demande d'établissement d'un chemin primaire (8) entre ledit routeur de tête (2) et ledit routeur de destination primaire (5) dans ledit réseau (1), **caractérisé en ce que** ladite demande comporte une demande d'établissement d'un chemin de secours (9) vers un routeur (7) de destination de secours, ladite demande d'établissement d'un chemin de secours étant destinée à l'avant-dernier routeur dans le chemin primaire.

12. Routeur de transit (4) susceptible d'être utilisé pour assurer l'acheminement de paquets dans un réseau (1) de commutation par étiquettes, les paquets étant initialement destinés à un routeur de destination primaire (5), ledit routeur (4) comportant des moyens de réception d'une demande d'établissement d'un chemin primaire (8) entre un routeur de tête (2) et ledit routeur de destination primaire (5) dans ledit réseau (1), ledit routeur de transit étant **caractérisé en ce que** ladite demande comporte une demande d'établissement d'un chemin de secours (9) vers un routeur de destination de secours (7), et en **en ce qu'**il comporte :
- des moyens pour déterminer s'il est le pénultième routeur dans ledit chemin primaire (8) ;
- des moyens de transmission de ladite demande vers ledit routeur de destination primaire (5) ; et
- des moyens pour transmettre une demande d'établissement d'un chemin de secours (9) ayant pour destination ledit routeur (7) de destination de secours, cette demande comportant un identifiant dudit routeur (5) de destination primaire pour lequel le chemin de secours (9) doit être établi, ainsi qu'un identifiant du chemin primaire secouru (8).

13. Signal portant une demande d'établissement d'un chemin primaire (8) entre un routeur de tête (2) et un routeur de destination primaire (5), pour assurer l'acheminement de paquets dans un réseau (1) de commutation par étiquettes, **caractérisé en ce que** ladite demande comporte une demande d'établissement d'un chemin de secours (9) vers un routeur (7) de destination de secours, ladite demande d'établissement d'un chemin de secours étant destinée à l'avant-dernier routeur dans le chemin primaire.

## Patentansprüche

1. Routingverfahren, das dazu geeignet ist, in einem Kopfrouter (2) eingesetzt zu werden, um die Beförderung von Paketen in einem Netzwerk (1) durch Etikettenvermittlung sicherzustellen, wobei die Pakete anfänglich für einen primären Zielrouter (5) bestimmt sind, wobei das Verfahren einen Schritt (E10) umfasst, um eine Herstellungsanforderung eines primären Pfads (8) zwischen dem Kopfrouter (2) und dem primären Zielrouter (5) in dem Netzwerk (1) auszugeben, **dadurch gekennzeichnet, dass** die Anforderung eine Herstellungsanforderung eines Hilfspfads (9) in Richtung eines Hilfszielrouters (7) umfasst, wobei die Herstellungsanforderung eines Hilfspfads für den vorletzten Router auf dem primären Pfad bestimmt ist.

2. Routingverfahren nach Anspruch 1, **dadurch gekennzeichnet, dass** die Herstellungsanforderung des Weiteren, teilweise oder vollständig, den Hilfspfad (9) umfasst, nämlich den Pfad zwischen dem Durchgangsrouter (4), der vor dem primären Zielrouter (5) auf dem primären Pfad (8) liegt, und dem Hilfszielrouter (7).

3. Routingverfahren nach Anspruch 1 oder 2, **dadurch gekennzeichnet, dass** es bei Erfassung (F70) einer Störung, welche die Kommunikation mit dem primären Zielrouter (5) betrifft, Folgendes umfasst:
- einen Schritt (E30) zum Empfangen einer Fehlermeldung für den primären Pfad, welche die Aktivierung des Hilfspfads angibt;
- einen Schritt (E35) zum Empfangen einer Reservierungsmeldung für den primären Pfad (8), wobei diese Meldung die Aktivierung des Hilfspfads (9) angibt und ein Feld umfasst, das einen Hilfspfad (9) einschließt, zwischen:
- einem Durchgangsrouter (4), welcher vor dem primären Zielrouter (5) auf dem primären Pfad (8) liegt; und
- dem Hilfszielrouter (7); und
- bei Ablauf (E50) einer zuvor bestimmten Frist, die ab dem Empfangen (E35) der Reservierungsmeldung läuft:
- einen Schritt (E60) zum Herstellen eines neuen primären Pfads in Richtung des Hilfszielrouters (7); und
- einen Schritt (E70) zum Unterdrücken des primären Pfads (8).

4. Routingverfahren, das dazu geeignet ist, in einem Durchgangsrouter (4) eingesetzt zu werden, um die Beförderung von Paketen in einem Netzwerk (1) durch Etikettenvermittlung sicherzustellen, wobei die Pakete anfänglich für einen primären Zielrouter (5) bestimmt sind, wobei das Verfahren einen Schritt (F10) zum Empfangen einer Herstellungsanforderung eines primären Pfads (8) zwischen einem Kopfrouter (2) und dem primären Zielrouter (5) in dem Netzwerk (1) umfasst, wobei das Verfahren **dadurch gekennzeichnet ist, dass** die Anforderung eine Herstellungsanforderung eines Hilfspfads (9) in Richtung eines Hilfszielrouters (7) umfasst, und dadurch dass es, wenn der Durchgangsrouter (4) der zweitletzte Router auf dem primären Pfad (8) ist, Folgendes umfasst:
- einen Schritt (F30) zum Übertragen der Anforderung in Richtung des primären Zielrouters (5); und
- einen Schritt (F40) zum Übertragen einer Herstellungsanforderung eines Hilfspfads (9), dessen Ziel der Hilfszielrouter (7) ist, wobei diese Anforderung eine Kennung des primären Zielrouters (5), für welchen der Hilfspfad (9) hergestellt werden muss, sowie auch eine Kennung des gesicherten primären Pfads (8) umfasst.

5. Routingverfahren nach Anspruch 4, **dadurch gekennzeichnet, dass** es Folgendes umfasst:
- einen Schritt zum Empfangen einer Reservierungsmeldung als Antwort auf die Herstellungsanforderung des Hilfspfads (9), wobei die Reservierungsmeldung eine Bestätigung der Herstellung des Hilfspfads (9) umfasst;
- einen Schritt zum Empfangen einer Reservierungsmeldung, die eine Bestätigung der Herstellung des primären Pfads (8) umfasst; und
- einen Schritt (F50) zum Ausgeben einer Reservierungsmeldung in Richtung des Kopfrouters (2), wobei diese Reservierungsmeldung eine Bestätigung der Herstellung des Hilfspfads (9) und eine Angabe umfasst, gemäß welcher dieser Pfad aktiviert ist oder nicht.

6. Routingverfahren nach Anspruch 4 oder 5, **dadurch gekennzeichnet, dass** es Folgendes umfasst:
- einen Schritt (F60) zum Konfigurieren einer Vermittlungstabelle (15), wobei diese Tabelle zwei Ausgänge für eine Eingangskennzeichnung umfasst, die dem primären Pfad (8) entspricht, nämlich:
- einen primären Ausgang, der in Richtung des primären Zielrouters (5) zeigt; und
- einen Hilfsausgang, der auf den Hilfspfad in Richtung des Hilfszielrouters (7) zeigt;
- einen Schritt (F70) zur Detektion einer Störung, welche die Kommunikation mit dem primären Zielrouter (5) betrifft; und bei Detektion der Störung:
- einen Schritt (F80) zum Aktualisieren der Vermittlungstabelle (15), der daraus besteht, den primären Ausgang zu deaktivieren und den Hilfsausgang zu aktivieren.

7. Routingverfahren nach Anspruch 6, **dadurch gekennzeichnet, dass** es des Weiteren bei Detektion (F70) der Störung Folgendes umfasst:
- einen Schritt (F90) zum Senden, an das Ziel des Kopfrouters (2), einer Fehlermeldung für den primären Pfad (8) ;
- einen Schritt (F100) zum Senden, an das Ziel des Hilfszielrouters (7), einer Herstellungsmeldung des Hilfspfads (9); und
- einen Schritt (F110) zum Senden, an das Ziel des Kopfrouters (2), einer Reservierungsmeldung für den primären Pfad (8), wobei diese Meldung ein Feld umfasst, das den Pfad zwischen dem Durchgangsrouter (4) und dem Hilfszielrouter (7) einschließt;
wobei diese Meldungen eine Angabe umfassen, gemäß welcher der Hilfspfad (9) aktiviert ist.

8. Routingverfahren nach irgendeinem der Ansprüche 4 bis 7, **dadurch gekennzeichnet, dass** es Folgendes umfasst:
- einen Schritt (F130) zur Detektion des Endes der Störung;
- einen Schritt (F140) zum Senden einer Meldung an den primären Zielrouter (5), um die Signalisierung des primären Pfads (8) wieder herzustellen; und
- einen Schritt (F160) zum Senden, an den Kopfrouter (2), einer Reservierungsmeldung, welche den Pfad zwischen dem Durchgangsrouter (4) und dem primären Zielrouter (5) und einer Angabe enthält, gemäß welcher der Hilfspfad (9) deaktiviert ist.

9. Computerprogramm, Anweisungen zum Ausführen der Schritte eines Routingverfahrens nach irgendeinem der Ansprüche 1 bis 8 umfassend, wenn das Programm durch einen Computer ausgeführt wird.

10. Aufzeichnungsträger, der durch einen Computer gelesen werden kann, auf dem ein Computerprogramm nach Anspruch 9 gespeichert ist, das Anweisungen zum Ausführen der Schritte eines Routingverfahrens nach irgendeinem der Ansprüche 1 bis 8 aufweist.

11. Kopfrouter (2), der dazu geeignet ist, verwendet zu werden, um die Beförderung von Paketen in einem Netzwerk (1) durch Etikettenvermittlung sicherzustellen, wobei die Pakete anfänglich für einen primären Zielrouter (5) bestimmt sind, wobei der Router Mittel umfasst, um eine Herstellungsanforderung eines primären Pfads (8) zwischen dem Kopfrouter (2) und dem primären Zielrouter (5) in dem Netzwerk (1) auszugeben, **dadurch gekennzeichnet, dass** die Anforderung eine Herstellungsanforderung eines Hilfspfads (9) in Richtung eines Hilfszielrouters (7) umfasst, wobei die Herstellungsanforderung eines Hilfspfads für den vorletzten Router auf dem primären Pfad bestimmt ist.

12. Durchgangsrouter (4), der dazu geeignet ist, verwendet zu werden, um die Beförderung von Paketen in einem Netzwerk (1) durch Etikettenvermittlung sicherzustellen, wobei die Pakete anfänglich für einen primären Zielrouter (5) bestimmt sind, wobei der Router (4) Mittel zum Empfangen einer Herstellungsanforderung eines primären Pfads (8) zwischen einem Kopfrouter (2) und dem primären Zielrouter (5) in dem Netzwerk (1) umfasst, wobei der Durchgangsrouter **dadurch gekennzeichnet ist, dass** die Anforderung eine Herstellungsanforderung eines Hilfspfads (9) in Richtung eines Hilfszielrouters (7) umfasst, und dadurch, dass er Folgendes umfasst:
- Mittel, um zu bestimmen, ob er der zweitletzte Router in dem primären Pfad (8) ist;
- Mittel zum Übertragen der Anforderung in Richtung des primären Zielrouters (5); und
- Mittel, um eine Herstellungsanforderung eines Hilfspfads (9) zu übertragen, deren Ziel der Hilfszielrouter (7) ist, wobei diese Anforderung eine Kennung des primären Zielrouters (5), für welchen der Hilfspfad (9) hergestellt werden muss, sowie auch eine Kennung des gesicherten primären Pfads (8) umfasst.

13. Signal, das eine Herstellungsanforderung eines primären Pfads (8) zwischen einem Kopfrouter (2) und einem primären Zielrouter (5) trägt, um die Beförderung von Paketen in einem Netzwerk (1) durch Etikettenvermittlung sicherzustellen, **dadurch gekennzeichnet, dass** die Anforderung eine Herstellungsanforderung eines Hilfspfads (9) in Richtung eines Hilfszielrouters (7) umfasst, wobei die Herstellungsanforderung eines Hilfspfads für den vorletzten Router auf dem primären Pfad bestimmt ist.

## Claims

1. Routing method able to be implemented in a head router (2) so as to ensure the forwarding of packets in a label switching network (1), the packets being initially intended for a primary destination router (5), said method comprising a step (E10) of sending a request for establishment of a primary path (8) between said head router (2) and said primary destination router (5) in said network (1), **characterized in that** said request comprises a request for establishment of a backup path (9) towards a backup destination router (7), said request for establishment of a backup path being intended for the last but one router in the primary path.

2. Routing method according to Claim 1, **characterized in that** said establishment request furthermore comprises the backup path (9), partial or complete, namely the path between the transit router (4) preceding said primary destination router (5) in the primary path (8) and said backup destination router (7).

3. Routing method according to Claim 1 or 2, **characterized in that** it comprises, on detection (F70) of a fault affecting the communication with said primary destination router (5):
- a step (E30) of receiving an error message for said primary path indicating the activation of the backup path;
- a step (E35) of receiving a reservation message for said primary path (8), this message indicating the activation of the backup path (9) and comprising a field including a backup path (9) between:
- a transit router (4) preceding said primary destination router (5) in said primary path (8); and
- said backup destination router (7); and
- upon the expiry (E50) of a predetermined lag reckoned from the reception (E35) of said reservation message:
- a step (E60) of establishing a new primary path towards said backup destination router (7); and
- a step (E70) of deleting said primary path (8).

4. Routing method able to be implemented in a transit router (4) so as to ensure the forwarding of packets in a label switching network (1), the packets being initially intended for a primary destination router (5), said method comprising a step (F10) of receiving a request for establishment of a primary path (8) between a head router (2) and said primary destination router (5) in said network (1), said method being **characterized in that** said request comprises a request for establishment of a backup path (9) towards a backup destination router (7), and **in that** it comprises, if said transit router (4) is the penultimate router in said primary path (8):
- a step (F30) of transmitting said request towards said primary destination router (5); and
- a step (F40) of transmitting a request for establishment of a backup path (9) having said backup destination router (7) as destination, this request comprising an identifier of said primary destination router (5) for which the backup path (9) must be established as well as an identifier of said backed-up primary path (8).

5. Routing method according to Claim 4, **characterized in that** it comprises:
- a step of receiving a reservation message, in response to said request for establishment of the backup path (9), said reservation message comprising a confirmation of the establishment of said backup path (9);
- a step of receiving a reservation message comprising a confirmation of the establishment of the primary path (8); and
- a step (F50) of sending a reservation message towards said head router (2), this reservation message comprising a confirmation of the establishment of said backup path (9) and an indication according to which this path is or is not activated.

6. Routing method according to Claim 4 or 5, **characterized in that** it comprises:
- a step (F60) of configuring a switching table (15), this table comprising two outputs for an input label corresponding to said primary path (8), namely:
- a primary output pointing towards said primary destination router (5); and
- a backup output pointing at the backup path towards said backup destination router (7);
- a step (F70) of detecting a fault affecting the communication with said primary destination router (5); and on detection of said fault:
- a step (F80) of updating said switching table (15) consisting in deactivating said primary output and in activating said backup output.

7. Routing method according to Claim 6, **characterized in that** it furthermore comprises, on detection (F70) of said fault:
- a step (F90) of dispatching, destined for said head router (2), an error message for said primary path (8) ;
- a step (F100) of dispatching, destined for said backup destination router (7), a message of establishment of said backup path (9); and
- a step (F110) of dispatching, destined for said head router (2), a reservation message for said primary path (8), this message comprising a field including the path between said transit router (4) and said backup destination router (7);
these messages comprising an indication according to which said backup path (9) is activated.

8. Routing method according to any one of Claims 4 to 7, **characterized in that** it comprises:
- a step (F130) of detecting the end of said fault;
- a step (F140) of dispatching a message to said primary destination router (5) to restore the signalling of said primary path (8); and
- a step (F160) of dispatching, to said head router (2), a reservation message containing the path between the transit router (4) and the primary destination router (5) and an indication according to which said backup path (9) is deactivated.

9. Computer program comprising instructions for the execution of the steps of a routing method according to any one of Claims 1 to 8 when said program is executed by a computer.

10. Recording medium readable by a computer on which is recorded a computer program according to Claim 9 comprising instructions for the execution of the steps of a routing method according to any one of Claims 1 to 8.

11. Head router (2) able to be used to ensure the forwarding of packets in a label switching network (1), the packets being initially intended for a primary destination router (5), said router comprising means for sending a request for establishment of a primary path (8) between said head router (2) and said primary destination router (5) in said network (1), **characterized in that** said request comprises a request for establishment of a backup path (9) towards a backup destination router (7), said request for establishment of a backup path being intended for the last but one router in the primary path.

12. Transit router (4) able to be used to ensure the forwarding of packets in a label switching network (1), the packets being initially intended for a primary destination router (5), said router (4) comprising means for receiving a request for establishment of a primary path (8) between a head router (2) and said primary destination router (5) in said network (1), said transit router being **characterized in that** said request comprises a request for establishment of a backup path (9) towards a backup destination router (7), and **in that** it comprises:
- means for determining whether it is the penultimate router in said primary path (8);
- means for transmitting said request towards said primary destination router (5); and
- means for transmitting a request for establishment of a backup path (9) having said backup destination router (7) as destination, this request comprising an identifier of said primary destination router (5) for which the backup path (9) must be established, as well as an identifier of the backed-up primary path (8).

13. Signal carrying a request for establishment of a primary path (8) between a head router (2) and a primary destination router (5), so as to ensure the forwarding of packets in a label switching network (1), **characterized in that** said request comprises a request for establishment of a backup path (9) towards a backup destination router (7), said request for establishment of a backup path being intended for the last but one router in the primary path.
